# EUROPEAN PATENT APPLICATION

(11) **EP 2 827 039 A1**
(43) Date of publication of application: **21.01.2015**
(21) Application number: 13176800.4
(22) Date of filing: 17.07.2013
(51) Int. Cl.: F16L 39/00

(54) **Quick connector**

(71) Applicant: Volvo Car Corporation, 40 531 Göteborg (SE)
(72) Inventor: Löwhagen, Kristian, 44242 Kungälv (SE); Hävell, Kjell, 41742 Göteborg (SE); Persson, Hanna, 42674 Västra Frölunda (SE)
(74) Representative: Kraenzmer, Martin

(57) **Abstract**

The invention relates to a quick connector (1) comprising a first part (2) and a second part (3). The first part (2) forms a seal (8) with the second part (3) via a first sealing surface (4) on the first part (2) and a second sealing surface (6) on the second part (3). The first part (2) comprises an outer connector (9) comprising a first through channel (13). The first part (2) comprises an inner connector (14) comprising a second through channel (15) where the outer connector (9) and inner connector (14) are in fluid communication via the first through channel (13) and the second through channel (15). The second part (3) comprises a housing (10) comprising a housing end (11) opposite the second sealing surface (6). The second part (3) comprises a third through channel (16), wherein the third through channel (16) extends between the second sealing surface (6) and the housing end (11). The inner connector (14) of the first part (2) protrudes a predetermined distance (L) into the third through channel (16), wherein the quick connector (1) comprises a conduit (12) attached to the inner connector (14), extending through and out from the third through channel (16).

## Description

### TECHNICAL FIELD

The invention relates to a quick connector comprising a first part and a second part. The first part forms a seal with the second part via a first sealing surface on the first part and a second sealing surface on the second part. The first part comprises an outer connector comprising a first through channel and an inner connector comprising a second through channel. The outer and inner connectors are in fluid communication via the first and second through channels.

### BACKGROUND ART

Quick connectors are used in many applications. One such application is in the automotive industry where there are a number of applications suitable for quick connectors. Today's quick connectors usually come in the form of a quick connector body having a fluid channel running through the body. An adapter with a connector onto which a conduit is attached is usually attached to the inside of the quick connector body by means of a kind of welding. This means that the welding takes place near the connection between an end of the conduit and the adapter. This increases the risk that heat or another kind of influence will affect the conduit negatively leading to that the conduit becomes damaged. This may lead to reduced fluid transport through the conduit or to a complete blockage of the conduit.

An improved quick connector is thus desirable.

### SUMMARY OF THE INVENTION

The object of the present invention is to provide an inventive quick connector where the previously mentioned problems are at least partly avoided. This object is achieved by the features of the characterising portion of claim 1.

The invention relates to a quick connector comprising a first part and a second part. The first part forms a seal with the second part via a first sealing surface on the first part and a second sealing surface on the second part. The first part comprises an outer connector comprising a first through channel. The first part comprises an inner connector comprising a second through channel where the outer connector and inner connector are in fluid communication via the first through channel and the second through channel. The second part comprises a housing comprising a housing end opposite the second sealing surface. The second part comprises a third through channel wherein the third through channel extends between the second sealing surface and the housing end. The inner connector of the first part protrudes a predetermined distance into the third through channel. The quick connector comprises a conduit attached to the inner connector and extends through and out from the third through channel.

An advantage with the present invention is that the risk of damaging the conduit when assembling the quick connector is reduced as the sealing surface between the first part and the second part is located at a predetermined distance from the inner connector. This means that when the quick connector is assembled an end portion of the conduit attached to the inner connector is in reduced risk of being damaged by chemical, mechanical, thermal or other influences which may arise from the assembly of the quick connector.

The first part may be made in one piece. This ensures that the first through channel and second through channel of the first part are air-tight such that no leakage of fluid takes place.

Said first through channel and said second through channel may be connected at an angle relative each other, specifically at an angle between 80° and 180° relative each other. An angle of 180° means that the channel is straight and an angle of 90° means that the first channel connects to the second channel at a right angle. An advantage of this feature is that the quick connector can be versatile in its applications. The angle is chosen dependent on the space available for mounting the quick connector.

The predetermined distance may be such that the inner connector does not protrude through the housing end of the second part. The predetermined distance may be up to 30 mm. Besides reducing the risk of the inner connector being damaged by chemical, mechanical, thermal or other influences which may arise from the assembly of the quick connector, this ensures that the inner connector is protected by the housing of the second part thereby reducing the risk of damaging the inner connector when handling the quick connector.

The predetermined distance may be such that the inner connector protrudes through the housing end of the second part. In certain applications this may be desirable due to design constraints.

The inner connector may be a male connector and the outer connector may be a male connector, a female connector, a fir tree connector or a snap connector. The outer connector of the first part can take any shape in order to be versatile for many different applications.

The seal may be formed by that the first and second part are connected by that the first and second sealing surfaces are welded or glued together. The seal may be air tight. By welding or gluing the first sealing surface and the second sealing surface together to form the seal, the quick connector can be bonded together to form an air tight unit or a not air tight unit. An air tight unit is desirable in application with liquids such as fuel, coolant or other types of liquids where an addition of air is undesirable or where it is undesirable that liquid can seep out in the event of damage to the conduit. In other applications the sealing can be controlled such that the seal is not air tight. This enables a less expensive production.

The seal may be formed by that the first part and second part are connected by a mechanical connection thereby sealing the first and second sealing surfaces. With mechanical connection is meant a joining of the sealing surfaces of the first and second part using grooves or other types of projections on one sealing surface and corresponding grooves or depressions on the second sealing surface. When joining the sealing surfaces mechanically the grooves and projections interact to form a seal. Techniques for such joining are known in the art.

The second part may comprise a housing connector. The connector may be located inside the third through channel or on the outside of the second part. This connector is used to connect the quick connector to a desired container.

The quick connector may be a quick connector used in various fluid transport systems, for instance fuel operated systems such as a fuel operated heater system, a brake fluid system or a coolant fluid system.

The quick connector according to the invention may be used in a vehicle for different applications.

### BRIEF DESCRIPTION OF THE DRAWINGS

Figure 1 schematically shows a perspective view of a quick connector according to the invention.
Figure 2 schematically shows a cross-section of the quick connector of figure 1 along the line I-I.
Figure 3 schematically shows an exploded view of the quick connector according to the invention.

### DETAILED DESCRIPTION

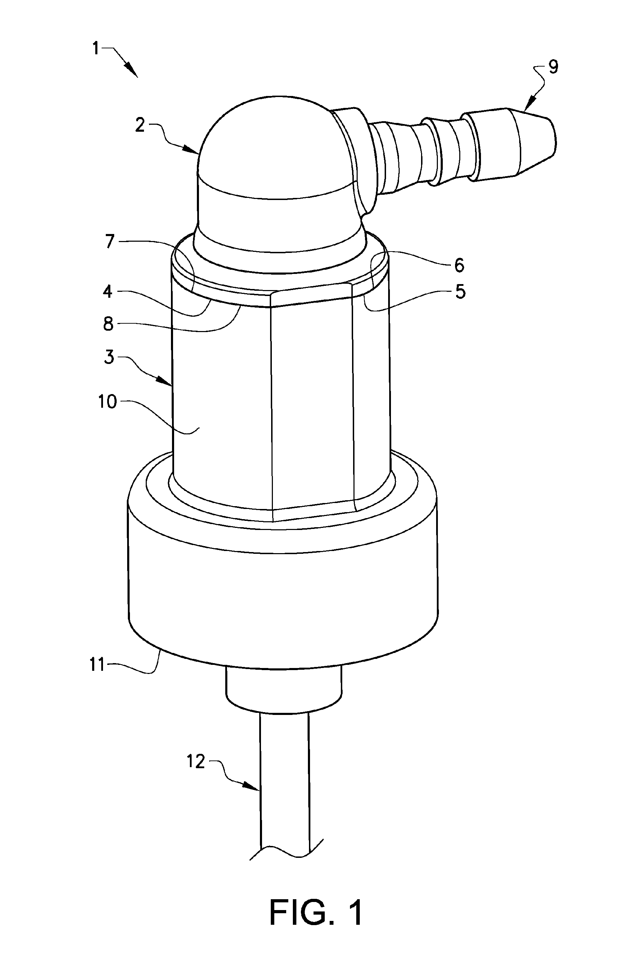

Figure 1 schematically shows a perspective view of a quick connector 1 according to the invention. The quick connector 1 comprises a first part 2 and a second part 3. The first part 2 comprises a first sealing surface 4 located at a first part bottom end 5. The second part 3 comprises a second sealing surface 6 located at a second part top end 7. The first sealing surface 4 and the second sealing surface 6 are arranged to form a seal 8 when joined. They can be joined by welding or gluing or by a mechanical connection.

The first part 2 further comprises an outer connector 9. The second part 3 comprises a housing 10 comprising a housing end 11 opposite the second sealing surface 6.

The outer connector 9 is in figure 1 in the shape of a fir tree connector. Further, a conduit 12 is shown extending from the quick connector 1.

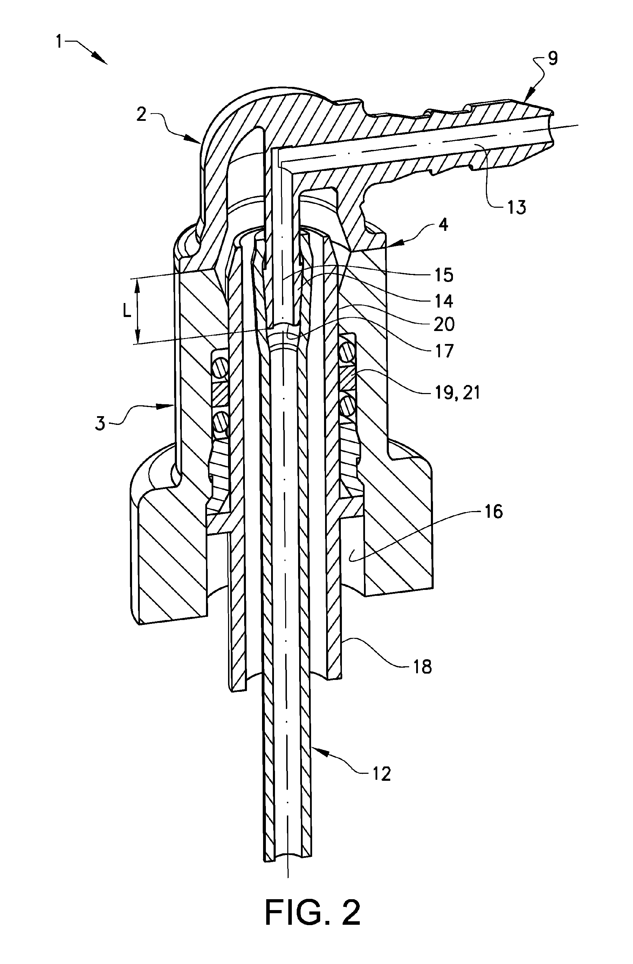

Figure 2 schematically shows a cross-section of the quick connector 1 of figure 1 along the line I-I. The outer connector 9 of the first part 2 comprises a first through channel 13 and an inner connector 14 comprising a second through channel 15. The first through channel 13 is in fluid connection with the second through channel 15, thus the outer connector 9 and inner connector 14 is in fluid communication via the first through channel 13 and second through channel 15.

The second part 3 comprises a third through channel 16. The third through channel 16 extends between the second sealing surface 6 and the housing end 11.

In figure 2 the inner connector 14 of the first part can be seen to protrude a predetermined distance L into the third through channel 16. The distance L is measured from the first sealing surface 4 to an inner connector end 17 of the inner connector 14.

In figure 2 the conduit 12 is seen to be attached to the inner connector 14. The conduit extends through and out from the third through channel 16.

In figure 2 a male adapter 18 is shown surrounding the conduit 12 forming an interior seal 19 between an interior surface 20 of the quick connector 1 and the male adapter 18 by means of interior sealing means 21. The interior sealing means 21 can for instance be O-rings and/or other known sealing means. By utilizing this solution a flange stud which is used in prior art connectors to form a seal between the conduit and the first channel is no longer necessary. This ensures that there is no risk for leaks at this point for either fluid fuel or evaporated emissions when the quick connector 1 is tilted for instance during an accident.

The inner connector 14 in figure 2 is a male adapter in the form of a fir tree connector. The inner connector 14 can take any suitable shape of a male connector onto which the conduit 12 can be attached.

The second part 3 may comprise a housing connector (not shown) located inside the third through channel 16 with operating means (not shown) placed on the outside of the housing 10 or located on the outside of the second part. Such connectors are known in the art and are therefore not described further.

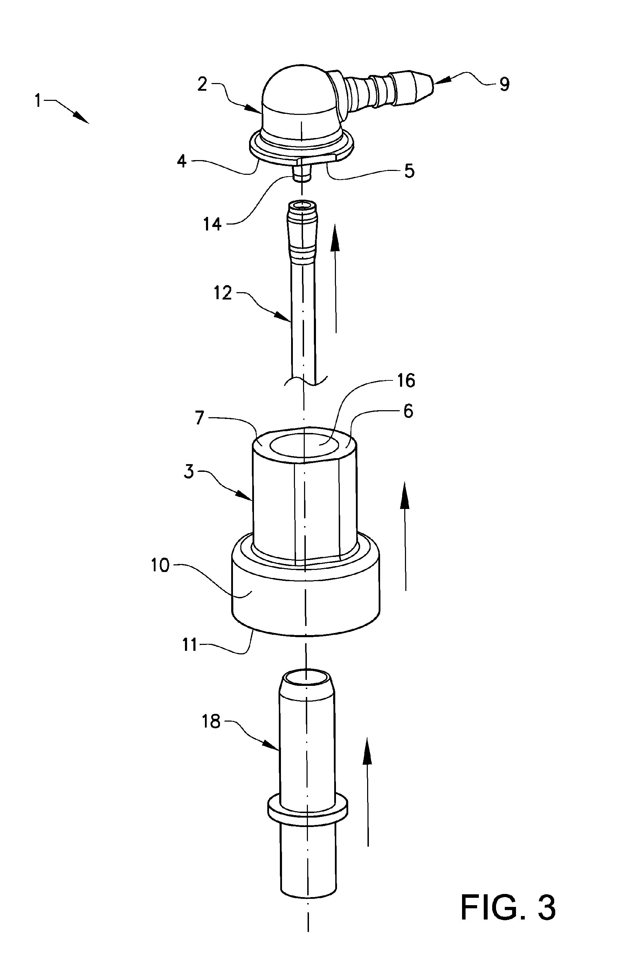

Figure 3 schematically shows an exploded view of the quick connector according to the invention. Figure 3 illustrates the assembly method for the quick connector 1. First, the conduit 12 is attached to the inner connector 14 of the first part 2. Thereafter, the second part 3 and the first part 2 are joined by sealing the first sealing surface 4 to the second sealing surface 6. Thereafter, the conduit 12 is inserted onto the male adapter 18 with a snap-in connection to complete the quick connector 1.

Reference signs mentioned in the claims should not be seen as limiting the extent of the matter protected by the claims, and their sole function is to make claims easier to understand.

As will be realized, the invention is capable of modification in various obvious respects, all without departing from the scope of the appended claims. Accordingly, the drawings and the description thereto are to be regarded as illustrative in nature, and not restrictive.

## Claims

1. Quick connector (1) comprising a first part (2) and a second part (3), the first part (2) forming a seal (8) with the second part (3) via a first sealing surface (4) on the first part (2) and a second sealing surface (6) on the second part (3), the first part (2) comprising an outer connector (9) comprising a first through channel (13), the first part (2) comprising an inner connector (14) comprising a second through channel (15), the outer connector (9) and inner connector (14) being in fluid communication via the first through channel (13) and the second through channel (15), **characterized in that** the second part (3) comprises a housing (10) comprising a housing end (11) opposite the second sealing surface (6), the second part (3) comprises a third through channel (16), wherein the third through channel (16) extends between the second sealing surface (6) and the housing end (11), wherein the inner connector (14) of the first part (2) protrudes a predetermined distance (L) into the third through channel (16), wherein the quick connector (1) comprises a conduit (12) attached to the inner connector (14) and extending through and out from the third through channel (16).

2. Quick connector (1) according to claim 1, wherein the first part (2) is made in one piece.

3. Quick connector (1) according to claim 1 or 2, wherein said first through channel (13) and said second through channel (15) are connected at an angle relative each other, specifically at an angle between 80° and 180° relative each other.

4. Quick connector (1) according to any one of claims 1-3, wherein the predetermined distance (L) is such that the inner connector (14) does not protrude through the housing end (11) of the second part (3).

5. Quick connector (1) according to claim 4, wherein the predetermined distance (L) is up to 30 mm.

6. Quick connector (1) according to any one of claims 1-3, wherein the predetermined distance (L) is such that the inner connector (14) protrudes through the housing end (11) of the second part (3).

7. Quick connector (1) according to any one of the preceding claims, wherein the inner connector (14) is a male connector and the outer connector (9) is a male connector, a female connector, a fir tree connector or a snap connector.

8. Quick connector (1) according to any one of claims 1-7, wherein the seal (8) is formed by that the first part (2) and second part (3) are connected by that the first sealing surface (4) and second sealing surface (6) are welded or glued together.

9. Quick connector (1) according to claim 8, wherein the seal (8) is air tight.

10. Quick connector (1) according to any one of claims 1-7, wherein the seal (8) is formed by that the first part (2) and second part (3) are connected by a mechanical connection thereby sealing the first sealing surface (4) and second sealing surface (6).

11. Quick connector (1) according to any of the preceding claims, wherein the second part (3) comprises a housing connector.

12. Quick connector (1) according to any one of the preceding claims, wherein the quick connector (1) is a quick connector for a fluid transport system.

13. Vehicle comprising a quick connector (1) according to any one of the preceding claims.
